# EUROPÄISCHE PATENTANMELDUNG

(11) **EP 0 698 784 A2**
(43) Veröffentlichungstag der Anmeldung: **28.02.1996**
(21) Anmeldenummer: 95112928.7
(22) Anmeldetag: 17.08.1995
(51) Int. Cl.: G01F 23/74, G01F 25/00

(54) **Füllstandsmessvorrichtung, insbesondere Überfüllsicherung für einen Flüssigkeitstank**

(30) Priorität: 22.08.1994 DE 9413499 U
(71) Anmelder: Unimess Messtechnische Geräte GmbH, D-61239 Ober-Mörlen (DE)
(72) Erfinder: Urich, Manfred, Dipl.-Ing., D-61250 Usingen (DE)
(74) Vertreter: Haar, Lucas H., Dipl.-Ing.

(57) **Zusammenfassung**

Bei einer Füllstandsmeßvorrichtung bestehend aus einem Gleitrohr (7) aus unmagnetischem Werkstoff, das eine durch Magnetkraft berührungslos betätigbare Schaltvorrichtung (8) enthält und an einer Platte (1) zum Verschließen einer Tanköffnung angeordnet ist, und aus einem an dem Gleitrohr (7) beweglich gelagerten Schwimmer (23), der einen ersten Permanentmagneten (24) zum Betätigen der Schaltvorrichtung (8), hat der Schwimmer (23) in einem Abstand von dem ersten Permanentmagneten (24) einen zweiten Permanentmagneten (25), der sich mit seinem Magnetfeld auf dem Magnetfeld eines entgegengesetzt polarisierten dritten Permanentmagneten (15) abstützt, der an dem Gleitrohr (7) befestigt ist. An dem Gleitrohr (7) ist eine Magnetspule (17) angebracht, durch deren Erregung ein die Wirkung des entgegengesetzt polarisierten Magnetfelds unterstützendes Magnetfeld von solcher Feldstärke erzeugbar ist, daß der Schwimmer (23) ohne Unterstützung durch Auftriebskräfte in die das Schalten der Schaltvorrichtung bewirkende Schaltstellung gehoben wird.

## Beschreibung

Die Erfindung betrifft eine Füllstandsmeßvorrichtung, insbesondere als Überfüllsicherung für einen Flüssigkeitstank, mit einem Gleitrohr aus unmagnetischem Werkstoff, das eine durch Magnetkraft berührungslos betätigbare Schaltvorrichtung enthält und an einer Platte oder einer Verschraubung zum Verschließen einer Tanköffnung angeordnet ist, und mit einem an dem Gleitrohr beweglich gelagerten Schwimmer, der einen Permanentmagneten zum Betätigen der Schaltvorrichtung aufweist und unabhängig vom Füllstand mittels einer elektromagnetischen Betätigungsvorrichtung in eine das Umschalten der Schaltvorrichtung bewirkende Schaltstellung bewegbar ist.

Füllstandsmeßvorrichtungen der angegebenen Art eignen sich für eine ferngesteuerte Überwachung ihrer Funktionsfähigkeit. Durch Ansteuern der elektromagnetischen Betätigungsvorrichtung läßt sich prüfen, ob der Schwimmer noch ausreichend beweglich ist und ob die Schaltvorrichtung schaltet.

Bei einer aus dem DE-GM 91 04 866 bekannten Füllstandsmeßvorrichtung dieser Art ist die aus einem Magnetanker und einer Magnetspule bestehende elektromagnetische Betätigungsvorrichtung auf der Außenseite der Platte oder Verschraubung angeordnet und der Magnetanker ist mit dem Schwimmer durch ein Seil aus korrosionsbeständigem Draht verbunden, das sich durch eine Bohrung in der Platte bzw. Verschraubung erstreckt. Durch das Seil wird hierbei verhindert, daß sich das Gewicht des Magnetankers auf den Schwimmer überträgt. Diese bekannte Vorrichtung hat sich in der Praxis bewährt. Sie ist jedoch ausschließlich für hohle Schwimmer vorgesehen, wobei die Dichtheit der Schwimmer durch einen Druckfühler überwacht werden muß.

Aus der DE-OS 28 54 284 ist ein magnetisch betätigbarer Schwimmerschalter zur Überwachung eines Flüssigkeitspegels bekannt, bei der der Schwimmer einen Permanentmagneten zur Schalterbetätigung und zusätzlich im Abstand zu diesem eine Permanentmagneteinrichtung aufweist, die mit einem in einem den Schwimmer führenden Gleitrohr senkrecht bewegbaren Magnet eine magnetische Haltebeziehung hervorruft, wenn dieser sich in der Nähe der zusätzlichen Permanentmagneteinrichtung befindet. Mit Hilfe eines Hebemechanismus kann der Magnet in dem Gleitrohr soweit angehoben werden, daß der Schwimmer aufgrund der Haltebeziehung von seiner unteren Grenzlage in einen Betriebsprüfungsbereich anhebbar ist. In der Ruhestellung befindet sich der bewegbare Hebemagnet außerhalb des wirksamen Bereichs der Wechselwirkung mit der vom Schwimmer getragenen Magneteinrichtung. Diese bekannte Vorrichtung ist vergleichsweise aufwendig und nicht für eine Fernsteuerung vorgesehen. Die Permanentmagneteinrichtung erhöht das Gewicht des Schwimmers und macht dementsprechend ein größeres Schwimmervolumen erforderlich.

Weiterhin ist aus der DE-OS 24 42 875 ein Schwimmer-Magnetschalter bekannt, bei der ein Schwimmer aus Vollmaterial in Flüssigkeiten mit einer geringeren Dichte als das Schwimmermaterial selbst nicht schwimmfähig ist. Um ein Anheben des Schwimmers durch die Flüssigkeit zu erreichen, schwebt der Schwimmer mit Hilfe des Magnetfelds eines Dauermagneten, der sich am unteren Teil des Schwimmers befindet, auf dem Magnetfeld eines entgegengesetzt polarisierten Dauermagneten, der unter dem Schwimmer auf dem Gleitrohr befestigt ist, das den Schwimmer führt und die Schaltvorrichtung enthält. Wird der Schwimmer von Flüssigkeit überflutet, so wird er durch die sich gegenseitig abstoßenden Magnetfelder der Dauermagnete soweit angehoben, daß das Magnetfeld des am Schwimmer befindlichen Dauermagneten die im Gleitrohr befindliche Schaltvorrichtung betätigt.

Der Erfindung liegt die Aufgabe zugrunde, einen Schwimmer der eingangs genannten Art zu schaffen, der sich durch einen einfachen mechanischen Aufbau, einen geringen Bauaufwand und eine hohe Betriebssicherheit auszeichnet.

Diese Aufgabe wird erfindungsgemäß dadurch gelöst, daß der Schwimmer in einem Abstand von dem der Schaltvorrichtung zugeordneten Permanentmagnet einen zweiten Permanentmagnet hat, der sich mit seinem Magnetfeld auf dem Magnetfeld eines entgegengesetzt polarisierten Permanentmagneten abstützt, der an dem Gleitrohr befestigt ist und daß an dem Gleitrohr eine Magnetspule angebracht ist, durch deren Erregung ein die Wirkung des entgegengesetzt polarisierten Magnetfelds unterstützendes Magnetfeld von solcher Feldstärke erzeugbar ist, daß der Schwimmer ohne Unterstützung durch Auftriebskräfte in die Schaltstellung gehoben wird.

Die erfindungsgemäße Füllstandsmeßvorrichtung kommt, von der Führung des Schwimmers auf dem Gleitrohr abgesehen, ohne eine mechanische Verbindung zwischen dem beweglichen Schwimmer und dem ortsfesten Gleitrohr mit seinen daran angebrachten Bauteilen aus. Alle Kräfte, die bei der Füllstandsüberwachung und bei der Funktionskontrolle zwischen dem beweglichen Schwimmer und dem stationären Gleitrohr zu übertragen sind, werden mit Hilfe von Magnetfeldern übertragen. Dies ermöglicht einen einfachen mechanischen Aufbau der Vorrichtung und ein hohes Maß an Funktionssicherheit.

Sowohl der Schwimmer als auch das Gleitrohr und die daran angebrachten Bauteile können mit einer vollständig geschlossenen Schutzschicht umgeben sein, die eine hohe Beständigkeit gegen aggressive Medien ermöglicht. Durch den entgegengesetzt polarisierten Permanentmagneten am unteren Ende des Schwimmers und am Gleitrohr wird das Schwimmergewicht oder ein erheblicher Teil desselben kompensiert, so daß der Schwimmer aus Vollmaterial hergestellt werden kann. Hierdurch kann eine Überwachung der Dichtigkeit des Schwimmers entfallen und seine Beständigkeit gegen aggressive Medien wird zusätzlich erhöht, da selbst bei einer Beschädigung der Oberfläche des Schwimmers durch ein aggressives Medium dieser noch funktionsfähig bleibt. Die erfindungsgemäße Ausgestaltung der Füllstandsmeßvorrichtung hat weiterhin den Vorteil, daß das Anheben des Schwimmers zur Funktionsüberwachung nur eine verhältnismäßig geringe, zusätzliche Magnetkraft erfordert, so daß die Magnetspule zur Erzeugung dieser zusätzlichen Magnetkraft vergleichsweise klein bemessen sein kann. Durch die Herstellung des Schwimmers aus Vollmaterial ist dieser weiterhin unempfindlich gegen Drücke, die in dem zu überwachenden Raum herrschen.

Weist die erfindungsgemäße Füllstandsmeßvorrichtung einen Hohlschwimmer auf, so kann dessen Dichtheit mit Hilfe der durch Magnetkraft berührungslos betätigbaren Schaltvorrichtung überwacht werden, die auch dann geschaltet wird, wenn der Schwimmer aus seiner normalen Ruhelage, in der er durch die entgegengesetzt polarisierten Permanentmagnete getragen wird, nach unten sinkt, weil in seinen undicht gewordenen Hohlraum eingedrungene Flüssigkeit sein Gewicht erhöht hat.

Eine vorteilhafte Ausgestaltung der erfindungsgemäßen Vorrichtung kann darin bestehen, daß am unteren Ende des Gleitrohrs ein topfförmiges Gehäuse mit seinem Boden befestigt ist, dessen zylindrische Wand das Gleitrohr in einem solchen konzentrischen Abstand umgibt, daß der auf dem Gleitrohr angeordnete Schwimmer mit seinem unteren, einen ringförmigen Permanentmagnet enthaltenden Ende in das Gehäuse hineinbewegbar ist, wobei im Boden des topfförmigen Gehäuses der entgegengesetzt polarisierte Permanentmagnet angeordnet ist und die Wand des Gehäuses einen ringförmigen Hohlraum aufweist, in dem sich die Magnetspule befindet. Ein Ansammeln von Flüssigkeit in dem von der Gehäusewand umgebenen Innenraum wird hierbei durch eine Öffnung im Boden des Gehäuses vermieden.

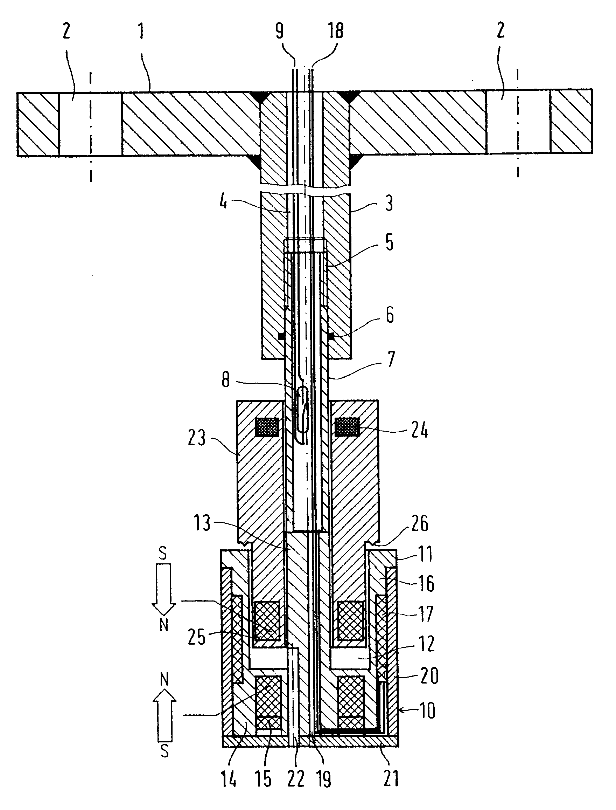

Die Erfindung wird nachfolgend anhand eines Ausführungsbeispielen näher erläutert, das in der Zeichnung dargestellt ist. Die Zeichnung zeigt einen Vertikalschnitt durch eine erfindungsgemäße Überfüllsicherung.

Die in der Zeichnung dargestellte Überfüllsicherung weist eine ebene Platte 1 mit Befestigungsbohrungen 2 auf, die zum Verschließen einer Behälteröffnung geeignet ist. In der Mitte der Platte 1 ist senkrecht zu dieser ein Trägerrohr 3 befestigt, das sich von der Platte 1 nach unten erstreckt und dessen Bohrung 4 an seinem unteren Ende ein Innengewinde 5 und eine Ringnut mit einem Dichtring 6 aufweist. In das Trägerrohr 3 ist von unten das mit einem Außengewinde versehenen Ende eines Gleitrohrs 7 eingeschraubt und mit Hilfe des Dichtrings 6 gegenüber dem Trägerrohr 3 abgedichtet. In dem Gleitrohr 7 befindet sich ein magnetisch betätigbarer Schutzgasschalter 8, der über Leitungen 9 an einen Überwachungsstromkreis angeschlossen ist. Die Leitungen 9 sind durch das Gleitrohr 7 und das Trägerrohr 3 nach oben geführt.

An dem unteren Ende des Gleitrohrs 7 ist ein Gehäuse 10 befestigt. Das Gehäuse 10 besteht aus einem inneren, topfförmigen Gehäusekörper 11 mit einem zylindrischen Innenraum 12, in dessen Mitte sich ein Zapfen 13 befindet, der zur Verbindung des Gehäuses mit dem Gleitrohr 7 dient. Der Zapfen 13 hat den gleichen Außendurchmesser wie das Gleitrohr 7, so daß seine Mantelfläche, die durch die Außenfläche des Gleitrohrs 7 gebildete Gleitfläche nach unten verlängert. In den Boden 14 des Gehäusekörpers 11 ist von unten ein ringförmiger Permanentmagnet 15 eingesetzt. Weiterhin ist die Seitenwand 16 des Gehäusekörpers 11 auf ihrer Außenseite mit einer ringförmigen Vertiefung versehen, in der eine Magnetspule 17 angeordnet ist. Die Magnetspule 17 ist über Leitungen 18 an einen Steuerstromkreis anschließbar. Die Leitungen 18 sind durch Nuten in der Außenseite des Gehäusekörpers 11, eine Längsbohrung 19 im Zapfen 13, das Gleitrohr 7 und das Trägerrohr 3 nach oben geführt. Die Seitenwand des Gehäusekörpers 11 ist außen von einer zylindrischen Hülse 20 umgeben, die dicht mit der Wand 16 durch Kleben oder schweißen verbunden ist. Das untere Ende der Hülse 20 ist durch eine Platte 21 dicht verschlossen, die den Boden 14 des Gehäusekörpers 11 vollständig bedeckt. Eine den Boden 14 und die Platte 21 durchdringende Bohrung 22 bildet einen Abflußkanal für den Hohlraum 12.

Auf dem Gleitrohr 7 und dem Zapfen 13 ist ein in Form einer zylindrischen Hülse gestalteter Schwimmer 23 verschiebbar gelagert. Der Schwimmer 23 besteht aus einem Vollmaterial geringer Dichte, beispielsweise einem Kunststoff. Er enthält in der Nähe seines oberen Endes einen ringförmigen Permanentmagnet 24 zum Betätigen des Schutzgasschalters 8. Mit seinem unteren Ende kleineren Durchmessers ragt der Schwimmer 23 in den Innenraum 12 des Gehäuses 10 hinein. Er weist dort einen ringförmigen Permanentmagneten 25 auf, dessen Pole zu den Polen des Permanentmagneten 15 entgegengesetzt angeordnet sind, so daß die Magnetfelder der beiden Magnete 15, 25 einander abstoßen.

Die Zeichnung zeigt den Schwimmer in seiner Normallage, in der er nicht in eine Flüssigkeit eingetaucht ist. In dieser Lage wird der Schwimmer 23 von den einander abstoßenden Feldern der Permanentmagnete 15, 25 je nach Auslegung vollständig oder zu einem wesentlichen Teil getragen. Sind die abstoßenden Kräfte der Permanentmagnete 15, 25 etwas kleiner als das Gewicht des Schwimmers 23, so stützt sich der Schwimmer 23 zusätzlich über Anschläge 26 an dem Gehäuse 10 ab. In dieser Stellung des Schwimmers 23 wird der Schutzgasschalter 8 durch den Permanentmagnet 24 geschlossen gehalten. Der Überwachungsstromkreis ist als Ruhestromkreis ausgelegt.

Soll die Funktion der Überfüllsicherung geprüft werden, so wird die Magnetspule 17 an eine Gleichspannungsquelle derart angeschlossen, daß das von der Spule 17 erzeugte Magnetfeld die Wirkung der einander abstoßenden Magnetfelder der Permanentmagneten 15, 25 soweit verstärkt, daß der Schwimmer 23 angehoben und der Schutzgasschalter 8 betätigt wird. Die dadurch bewirkte Unterbrechung des Überwachungsstromkreises zeigt dann an, daß der Schwimmer 23 ausreichend beweglich ist und daß der Schutzgasschalter schaltet. Hieraus kann geschlossen werden, daß der Schwimmer 23 auch durch Auftriebskräfte angehoben wird und der Schutzgasschalter 8 bei Erreichen des maximalen Füllstands den Überwachungsstromkreis unterbricht. Wird die Magnetspule 17 aberregt, so fällt der Schwimmer wieder in seine Ausgangslage zurück.

Wie das Ausführungsbeispiel zeigt, eignet sich die beschriebene Füllstandsmeßvorrichtung in besonderem Maße für den Einsatz in Behältern, die mit aggressiven Flüssigkeiten gefüllt werden. Alle nach außen freiliegenden Bauteile der Vorrichtung können aus gegen Säuren und Laugen besonders beständigen Kunststoffen hergestellt werden. Die Permanentmagnete sind vollständig im Schwimmer bzw. im Gehäuse eingebettet und dadurch vor der Einwirkung aggressiver Medien geschützt, ebenso die Magnetspule und die Schaltvorrichtung.

## Patentansprüche

1. Füllstandsmeßvorrichtung, insbesondere als Überfüllsicherung für einen Flüssigkeitstank, mit einem Gleitrohr aus unmagnetischem Werkstoff, das eine durch Magnetkraft berührungslos betätigbare Schaltvorrichtung enthält und an einer Platte oder einer Verschraubung zum Verschließen einer Tanköffnung angeordnet ist, und mit einem an dem Gleitrohr beweglich gelagerten Schwimmer, der einen Permanentmagneten zum Betätigen der Schaltvorrichtung aufweist und unabhängig vom Füllstand mittels einer elektromagnetischen Betätigungsvorrichtung in eine das Umschalten der Schaltvorrichtung bewirkende Schaltstellung bewegbar ist, **dadurch gekennzeichnet**, daß der Schwimmer (23) in einem Abstand von dem der Schaltvorrichtung (8) zugeordneten Permanentmagnet (24) einen zweiten Permanentmagnet (25) hat, der sich mit seinem Magnetfeld auf dem Magnetfeld eines entgegengesetzt polarisierten Permanentmagneten (15) abstützt, der an dem Gleitrohr (7) befestigt ist und daß an dem Gleitrohr (7) eine Magnetspule (17) angebracht ist, durch deren Erregung ein die Wirkung des entgegengesetzt polarisierten Magnetfelds unterstützendes Magnetfeld von solcher Feldstärke erzeugbar ist, daß der Schwimmer (23) ohne Unterstützung durch Auftriebskräfte in die Schaltstellung gehoben wird.

2. Füllstandsmeßvorrichtung nach Anspruch 1, dadurch gekennzeichnet, daß der Schwimmer (23) aus Vollmaterial geringer Dichte besteht.

3. Füllstandsmeßvorrichtung nach Anspruch 1, dadurch gekennzeichnet, daß sie einen Hohlschwimmer aufweist, dessen Dichtheit mit Hilfe der durch Magnetkraft berührungslos betätigbaren Schaltvorrichtung überwacht wird, die dann geschaltet wird, wenn der Schwimmer unter seine normale Ruhelage sinkt, in der er durch die entgegengesetzt polarisierten Permanentmagnete getragen wird.

4. Füllstandsmeßvorrichtung nach einem der vorhergehenden Ansprüche, dadurch gekennzeichnet, daß am unteren Ende des Gleitrohrs (7) ein topfförmiges Gehäuse (10) mit seinem Boden (14) befestigt ist, dessen zylindrische Wand (16) das Gleitrohr (7) in einem solchen konzentrischen Abstand umgibt, daß der auf dem Gleitrohr (7) angeordnete Schwimmer (23) mit seinem unteren, einen ringförmigen Permanentmagnet (25) enthaltenden Ende in das Gehäuse (10) hineinbewegbar ist, wobei im Boden (14) des topfförmigen Gehäuses (10) der entgegengesetzt polarisierte Permanentmagnet (15) angeordnet ist und die Wand (16) des Gehäuses einen ringförmigen Hohlraum aufweist, in dem sich die Magnetspule (17) befindet.

5. Füllstandsmeßvorrichtung nach Anspruch 4, dadurch gekennzeichnet, daß in den von der Gehäusewand (16) umgebenen Innenraum (12) eine Öffnung (22) im Boden (14) des Gehäuses (10) mündet.
